(19) Europäisches Patentamt / European Patent Office / Office européen des brevets

(11) **EP 2 224 771 A1**

(12) **EUROPEAN PATENT APPLICATION**

(43) Date of publication:
**01.09.2010  Bulletin 2010/35**

(51) Int Cl.:
**H04W 48/14** $^{(2009.01)}$

(21) Application number: **09250535.3**

(22) Date of filing: **27.02.2009**

<table>
<tr><td>

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **BRITISH TELECOMMUNICATIONS public limited company**
**London**
**EC1A 7AJ (GB)**

</td><td>

(72) Inventor: **The designation of the inventor has not yet been filed**

(74) Representative: **Williamson, Simeon Paul et al**
**BT Group Legal**
**Intellectual Property Department**
**PP C5A, BT Centre**
**81 Newgate Street**
**London**
**EC1A 7AJ (GB)**

</td></tr>
</table>

(54)  **Access point information server**

(57)  A global access point information server 400 is suitable for use with a plurality of mobile devices 310, 320, 330 each of which contains at least a first and a second type of transceiver for communicating with base stations 110, 120, 130 via a first communication technology and with access points 210, 220, 230 via a second communication technology respectively. The global access point information server (400) stores access point information and other associated information related to a first region and includes a receiver for receiving sensed information from a mobile device, a processor for processing the received sensed information to identify a subset of the access point information data stored by the server which is pertinent to the mobile device and a transmitter for transmitting this information to the device.

Figure 1

## Description

## Field of the Invention

The present invention relates to a behaviour modelling server for use with mobile devices having plural radio transceivers (such as, for example, GSM (TDMA), UMTS (CDMA), Wi-Fi (IEEE 802.11x) Bluetooth, WiMax (IEEE 802.16), GPS, etc.). In such devices there is constantly a problem with excessive power consumption of the device by these plural transceivers. This leads to an undesirably short battery lifetime for the mobile device in question (a typical example with current mobile phones at the priority date of the present application is that a typical mobile phone with wi-fi capabilities may have its battery flattened within 3 hours or so by leaving the wi-fi transceiver on).

## Background to the Invention

In order to effectively manage the use of the radios on the mobile device, the first problem that arises is identifying when any given radio can be used (for useful communication). For example, there is no point in having a Wi-Fi transceiver switched on and wasting battery power if there are no access points within range to which the user is authorised to connect. But then, if your Wi-Fi radio is not on, how does the device determine whether or when a suitable access point is in or comes into range?

A number of proposals for addressing this problem have been made in the past. For example in US 2002/0187780, a system is proposed in which each mobile device maintains a table which specifies for each of a number of cells (identified by a respective cell id number) associated with a UMTS cellular network, the presence or absence of any of a number of different access points for different network technologies (e.g. a GPRS access point or a Personal Area Network (PAN) access point). This table is stated as either being stored on the device by the manufacturer, or of being downloaded onto the device at a later stage, or of being constructed by the device itself based in the device's own observations made over a training period. This system provides a significant improvement over current solutions where it is left entirely in the user's hands to decide when to switch on or not a particular radio transmitter, etc. One interesting point which is made in this document is that the use of a table which is generated by the device itself has an advantage over a factory installed table in that it can be much smaller as it only needs to relate to cell ids which the device actually encounters in its usage, rather than say having to consider every cell in a particular country or region.

A later document, US 2007/0026866, describes an enhancement to this idea by suggesting that in addition to associating particular cellular network cell id's with the existence of access points for other radio technologies, as is done in the earlier document, it is further possible to use additional information to improve the estimation of whether or not a particular type of access point is likely to be in range of the mobile device. Examples of such other factors which could be used include the sequence of previous cell id's encountered by the mobile device (e.g. as being indicative of the user being on a regular route - e.g. from home to office, or vice versa) and the times of entering a particular cell id (e.g. it may take 10 minutes from entering a cell associated with a user's workplace, for the device to reach a place where it is in range of a work-based access point). This type of fairly simple modelling greatly improves the accuracy with which a device can determine whether or not it is worthwhile trying to use a particular transceiver, without having to have that transceiver switched on and consuming battery power.

Nonetheless, there would be benefits if a more sophisticated type of modelling could be performed.

## Summary of the Invention

According to a first aspect of the present invention, there is provided a global access point information server for use with a plurality of mobile devices each of which contains at least a first and a second type of transceiver for communicating via first and second different communication technologies respectively (at least one of which is a wireless technology), the global access point information server storing access point information and other associated information related to a first region, the server including a receiver for receiving sensed information from a mobile device and a processor for processing the received sensed information to identify a subset of the access point information data stored by the server which is pertinent to the mobile device and transmitting this information to the device.

The other associated information will typically be location providing information (e.g. cell id's within range of the first transceiver, etc.) but could be any type of information that may have a bearing on the availability of an access point to which the second transceiver may connect such as, for example, information concerning the presence of the user associated with the mobile device on some sort of on-line system (e.g. being logged on via a computer to an instant messaging service, etc.).

The sensed information can be direct sensed information (e.g. cell id) or processed sense information (estimated location) or data obtained from a data source (e.g. calendar information) or from a user (e.g. an indication that the network operator used by the device has been changed), or the sensed information could have been very heavily processed from the original sense data - e.g. it could be a complete behaviour pattern model.

This arrangement provides a number of significant advantages over the known systems for permitting a mobile device to ascertain whether or not there is a reasonable chance of a second transceiver (e.g. a Wi-Fi transceiver) being able to communicate to an appropriate access point (e.g. a Wi-Fi access point) without having to leave the second transceiver device permanently switched on and scanning for a suitable connection. For example, it is possible for the server to perform more sophisticated modelling to provide greater accuracy and reliability of access point availability prediction, not only because the server can typically have much more computing resources available to it (e.g. memory, processing power, large bandwidth connection to the Internet, etc.) but also because it can obtain useful sense information from a large number of different mobile devices. However, since only a tailored sub-set of the information which the server stores is provided to any one mobile device, the mobile device has the benefits observed in US 2002/0187780 that the amount of information which the device needs to store is less than is required for the global set of information; this not only reduces the mobile device's memory requirements but also enables it to process the information more quickly (e.g. searching for relevant information is speeded up if the total amount of data to be searched through is reduced, and the amount of processing required to keep any indexes associated with the data up to date is also correspondingly reduced).

Furthermore, this arrangement makes it easy for the system to cope with, for example, a user changing network operator. Note that with many current mobile phones they are only generally able to connect via a first transceiver (e.g. a GSM transceiver) to the access points (e.g. GSM base stations) associated with their network operator and thus the sense data which they obtain relates only to a subset of the access points associated with the first transceiver type. However, provided the global server has global knowledge about all of the access points (e.g. GSM base stations) associated with the first transceiver type (e.g. because of publicly available data concerning the geographical location of all such access points, or because of having received sense data from a sufficiently large number of mobile devices including a number of devices operating in overlapping geographical areas but being associated with different network operators), it is able to substitute information pertaining to the access points associated with one network operator to those of another should a mobile device change its service provider (i.e. change from one network operator to another). This could be done by arranging for the mobile device to upload all of its current access point information together with a request that it be "translated" from one network operator to another.

A similar "translation" could also be made should a user upgrade his mobile phone from one type of cellular access technology to another - e.g. if the first transceiver is upgraded from a GSM type transceiver to a UMTS 3G type transceiver. A further similar translation could be made if a network operator modifies its network configuration in any way (again provided the server is able to ascertain what changes have been made - either from public sources or from sense data from affected mobile devices, etc.). To assist with such translations it may be beneficial for the server to store a copy of the subset of data associated with each mobile device (or a "pointer" identifying the respective subset of data) so that it is not necessary for the mobile device to transmit this to the server in order for the data to be translated. It will also enable the data to be easily recovered should the mobile device be lost or stolen or damaged etc.

The server can store not only static correspondence between sense data that can be obtained from the mobile device without using its second transceiver and access point availability for the mobile device's second transceiver, but also complex time based models providing a correspondence between past events sensed by the device without using it's second transceiver and the probability of the device coming into range of an access point with which it's second transceiver may communicate at some future time.

Such models can be derived based on an analysis both of previous sense data supplied by the mobile device in question and from an aggregate of sense data provided by other devices. For example, if a particular sequence of sense data is commonly repeated by a large number of mobile devices, it may be indicative of a popular route (e.g. on a train) shared by a large number of people. In such a case, if a mobile device is detected as travelling on the route it can receive an appropriate statistical model from the global server as soon as it starts such a journey, or after completing the journey only once or only a few times, rather than needing to have performed the journey a large number of times in order to train the system based only on the experiences of the single device. Clearly, a personalised model is generally the best one to use, but if a device departs form the scope of its previous experiences it may be useful to supplement the devices personalised model with a standard statistical model associated with popular journeys etc. as mentioned above.

According to a second aspect of the present invention, there is provided a method of providing access point information to mobile devices, the method comprising providing a global access point information server for use with a plurality of mobile devices each of which contains at least a first and a second type of transceiver for communicating via first and second different communication technologies respectively (at least one of which is a wireless technology); storing, at the global access point information server, access point information and other associated nformation related to a first region, receiving, at the global access point information server, sensed information from a mobile device and processing the received sensed information to identify a subset of the access point information data stored by the server which is pertinent to the mobile device and transmitting this information to the device.

Further aspects of the present invention provide computer programs for carrying out the method of the second aspect of the present invention and a computer readable medium, preferably a tangible computer readable medium such as a magnetic or optical storage disc or a solid-state memory device, etc., having such a computer program or programs stored thereon.

## Brief Description of the Drawings

In order that the present invention may be better understood, embodiments thereof will now be described, by way of example only, with reference to the accompanying drawings in which:

Figure 1 is a schematic block diagram showing in overview a system according to an embodiment of the present invention;

Figure 2 is a schematic block diagram showing one of the mobiles devices of Figure 1 in greater detail together with the global server of Figure 1 (together with other systems to which the server can connect) in greater detail and showing the interfaces connecting these together; and

Figure 3 is a graph showing a ramp function for use by the device controller subsystem of the mobile device of Figure 2.

## Detailed Description of a First Embodiment

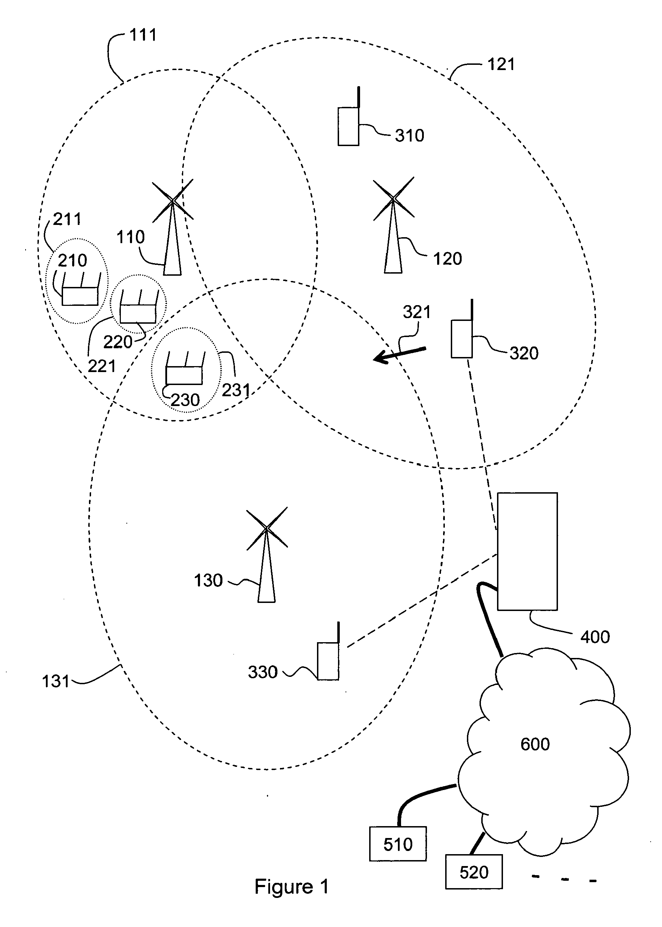

Referring to Figure 1, the system comprises a plurality of broadcast masts 110, 120 and 130 (each having an associated area of coverage 111, 121, 131 respectively) which provide cellular mobile coverage to a plurality of mobile devices 310, 320, 330 each of which has a first transceiver being a transceiver associated with the wide coverage cellular broadcast network architecture 110,111, 120,121, 130,131 such as GSM or UMTS 3G and a second transceiver associated with a network architecture having hot spots (i.e. much narrower geographical coverage but higher bandwidth connections available when within coverage of a suitable access point), in particular, in the present embodiment, the second transceivers are Wi-Fi transceivers and the system additionally includes a plurality of Wi-Fi- access points 210, 220, 230 having hot-spot coverage areas 211, 221, 231 respectively. Additionally, the system includes a global access point information server 400 which has a connection to other devices 510, 520 via the Internet 600.

In Figure 1, two of the mobile devices are illustrated as being currently static, whilst one of the devices is illustrated as being in motion as indicated by the arrow 321.

## Overview

In overview, the system operates as follows: during an initial training period, each mobile device 310, 320, 330 operates in a basically conventional manner in which the user controls whether or not the second transceiver (i.e. the Wi-Fi transceiver) is switched on or not, and in the meantime the system records any relevant sense information which it observes during its operation. This sense information is then processed (in the present embodiment) both locally using a behaviour pattern modelling subsystem extant on the mobile device and remotely by sending the recorded sense data to the global server 400 which has its own user behaviour pattern model trainer.

After an initial training period has completed the mobile devices then have their second transceivers' operation controlled automatically by the devices themselves in order to minimise battery consumption associated with unnecessary use of the second transceiver (e.g. polling for a connection when there is no suitable access point in range, or powering the second transceiver when there is no real demand for usage of the transceiver by any of the applications running on the mobile device). Once the devices have been trained they can use current sense data to estimate whether or not they are likely to come into range of a suitable access point for connection to using their second transceiver. For example, once device 320 is trained, it may be able to ascertain that by observing that it has moved from a position where only cell 121 is connectable to using its first transceiver, to a position where both cell 121 and cell 131 are connectable to, indicates based on past behaviour that it is likely to come in range of one or more of the access points 210, 220 and/or 230 within the next few minutes; and this knowledge can be used to control how an application running on the device which would like to, say, download a podcast some time within the next few hours, is managed (i.e. no action is taken until the device considers it is likely to be within range of one of the access points 210, 220, 230 at which point the second transceiver is switched on, if it successfully connects to an access point 210, 220, 230 then the pod cast desiring application is informed of connection availability and it can commence download of the pod-cast).

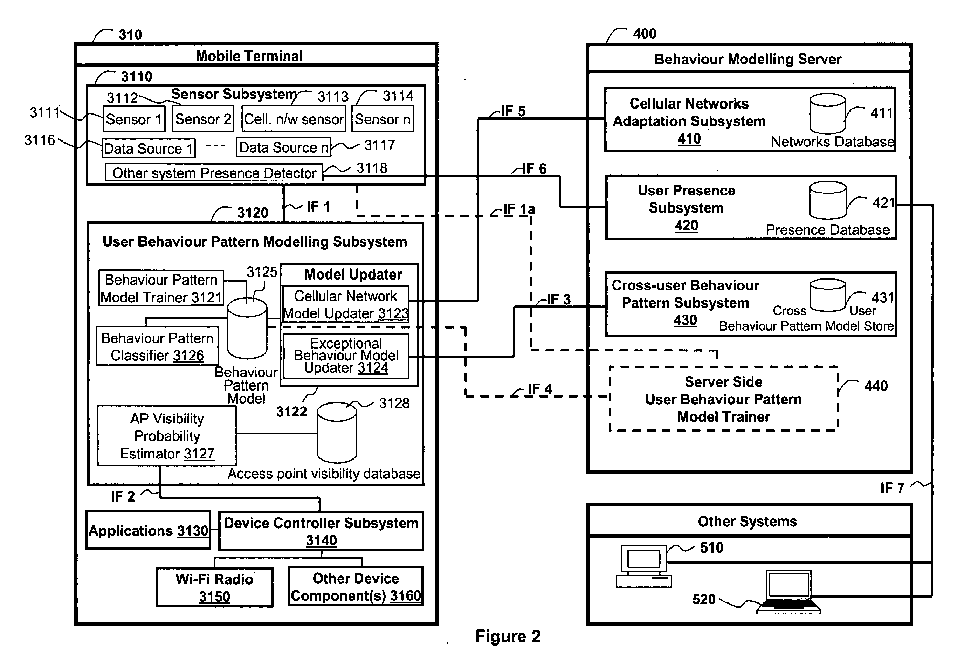

Referring now to Figure 2, it can be seen that each mobile device 310 has a sensor subsystem 3110, a user behaviour pattern modelling subsystem 3120, a set of applications 3130 a device controller subsystem 3140 which is operable to control a Wi-Fi radio 3150 (which forms the second transceiver in the present embodiment) and other device components 3160 (including a GSM transceiver which forms the first transceiver in the present embodiment) which also form part of the device 310.

The Sensor Subsystem 3110 comprises a number of sensors 3111-3114 (including a cellular network sensor 3113 which can detect which cells associated with the cellular network to which the first transceiver can connect are in range) and a number of data sources 3116, 3117 such as a calendar. Examples of the sort of sensors and data sources which could be included in the sensor subsystem are: acceleraometer, microphone, compass, location sensor (e.g. GPS), Cellular mobile transceiver (e.g. GSM radio), calendar, Other wireless radios (e.g. Wi-Fi, Bluetooth, Zigbee), Camera, Luminosity sensor, etc. The sensor subsystem 3110 also comprises an other system presence detector. This is discussed in greater detail below but it is basically operable to establish if the user associate with the device is indicated as being present on the presence server associated with some system not necessarily associated with the mobile device itself (e.g. it can contact via whatever connection is available to it a designated presence server of, for example, an instant messaging service to which the user of the device subscribes).

The User behaviour pattern modelling subsystem 3120 comprises a behaviour pattern model trainer 3121, a model updater 3122 which includes a cellular network model updater 3123 and an exceptional behaviour model updater 3124, a behaviour pattern model data store 3125, a behaviour pattern classifier 3126 an Access Point (AP) visibility probability estimator 3127 and an access point visibility database 3128 all of which are discussed in greater detail below.

The global access point information server 400 (also hereinafter sometimes referred to as a Behaviour Modelling Server) includes a processor and associated memory which stores program code means operable to cause the server to provide a cellular networks adaptation subsystem 411, a user presence subsystem 421, a cross-user behaviour pattern subsystem 431 and a server side user behaviour pattern model trainer 440, the functions of each of which are described below. The system also includes other computer devices/systems 510, 520 which are connected to the user presence subsystem of the global server 400 via an interface IF 7 (which passes through the Internet 600 in the present embodiment).

Altogether, the various components shown in Figure 2 are able to communicate with one another over 8 interfaces IF1, IF1a, IF2, IF3, IF4, IF5, IF6 and IF7. IF1 connects the sensor subsystem 3110 to the local user behaviour pattern modelling Subsystem 3120 of the mobile device 310; IF 1a connects the sensor subsystem 3110 to the server side user behaviour pattern model trainer 440; IF2 connects AP visibility probability estimator 3127 of the local user behaviour pattern modelling Subsystem 3120 of the mobile device 310 to the device controller subsystem 3140; IF3 connects the Exceptional Behaviour model updater 3124 of the local user behaviour pattern modelling Subsystem 3120 of the mobile device 310 to the cross-user behaviour pattern subsystem 431; IF4 connects the behaviour pattern model data store 3125 to the server side user behaviour pattern model trainer 440 of the global server 400; IF5 connects the cellular network model updater 3123 of the local user behaviour pattern modelling Subsystem 3120 of the mobile device 310 to the cellular networks adaptation subsystem 411 of the global server 400; IF6 connects the other system presence detector 3118 of the sensor subsystem 3110 of the mobile device 310 to the user presence subsystem 421 of the global server; and IF7 connects the user presence subsystem 421 to other systems including systems 510 and 520 as mentioned above. The various interfaces to the server 400 (IF5, IF6, IF3, IF4, IF1a) include appropriate receivers and transmitters (and/or transceivers) for sending and receiving data etc. Generally the mobile terminal is able to use any of its various transceivers for establishing a connection to the server 400 in order to effect the various interfaces.

## Detailed Description of the components of Figure 2

### Mobile Device 310

The mobile device is a mobile terminal such as a smartphone (could be a PDA or Laptop with cellular communications capability). The mobile terminal runs a piece of client software with the components described below, and communicates with a behaviour modelling server over any suitable communications link (e.g. GPRS/3G/Wi-Fi).

### Sensor Subsystem 3110

The purpose of the Sensor Subsystem is to detect the environment that the device is in and gather any information that might be relevant to enable the prediction of the user's/device's behaviour (especially as regards whether or not the device might be coming into range of an access point 210, 220, 230). The Sensor Subsystem then provides this data to the User Behaviour Modelling Subsystem 3120 and additionally in the present embodiment to the server side user behaviour pattern model trainer 440 most conveniently by storing up batches of relevant sense data and then transmitting such batches when the device has a relatively high bandwidth connection to the server 400 available). A wide range of sensors are possible. Some of these are listed below. There is a wide range of possible post-processing options to convert the raw sensor data into forms more suitable for modelling. Each sensor will typically produce a vector of floating point values or symbols at fixed time intervals (though sensors producing asynchronous output would also be possible).

Accelerometer

Provides information regarding the movement (or lack thereof) of the mobile terminal (typically currently available sensors can provide acceleration information on three axes). Post processing can involve a range of options, including, but not limited to:

- Principle component analysis
- Fourier analysis of sequences of accelerometer inputs
- Modelling the spectral shape from the above (e.g. by cepstral or cosine transforms)

- Counting frequencies of acceleration moduli exceeding threshold values in given timeframes

Microphone

Provides information regarding the acoustic environment.
Post processing can involve options such as:

- Calculating acoustic power level
- Fourier analysis of the audio input
- Modelling the spectral shape from the above (e.g. by cepstral or cosine transform)

Compass

Provides an indication of the orientation of the mobile terminal. Similar processing is possible as for the accelerometer.

Location sensor (e.g. GPS)

This produces location information (latitude, longitude, altitude, plus velocity information)

Cellular Mobile Transceiver (e.g. GSM radio)

This produces information on the identity of the attached cell (Cell ID, location area code (LAC), mobile network code (MNC), mobile country code (MCC)) and signal strength. Throughout the rest of this document we will refer to Cell ID, as a shorthand for the aggregation of the Cell ID, LAC, MNC and MCC.
Some devices may be able to determine the identity and signal strength of not just the attached cell, but also other nearby cells, or may be able to gather other information such as timing advance (a characteristic that is indicative of the distance of the terminal from the cellular base station). Information from multiple cells can be processed (e.g. using triangulation) to obtain location estimates.

Other Wireless radios (e.g. Wi-Fi, Bluetooth, Zigbee)

Base station identities and signal strengths (e.g. SSID and MAC address for Wi-Fi access points)

Camera

Visual information regarding the surroundings of the device. This might be post processed into a simple luminosity figure, or average levels of RGB across the image or any other similar statistical information about the image (or there could be sophisticated image recognition performed to identify whether the image contains specified items).

Luminosity sensor

Produces a simple value indicating the luminosity of the environment the device is in.

Calendar

Can proved text identifying current and future appointment titles and locations. The calendar function may also include a system clock providing the current time and possibly also an indication of the time zone which the device is in.

Other system presence information

It can be useful to know whether the user is active on other computer systems - have they just logged into their PC. Are they actively typing on it? Have they just logged out. Etc. This information, known as "presence" data, is gathered from the presence subsystem (which in turn gathers it from other systems (e.g. systems 510, 520) that the user has access to via the Internet 600 (or which have access to this user information)).

*User behaviour modelling pattern subsystem 3120*

The key features of the modelling subsystem are:

- It is able to handle variability in the patterns of behaviour - (the repetitions will not be identical)
- It is capable of handling both continuously variable and symbolic sensor data
- It is capable of recognising partial patterns of behaviour, specifically the start of each pattern (e.g. the first leg of a routine journey) so that we can predict the rest of the pattern (e.g. journey).
- In conjunction with the cellular networks adaptation subsystem 411 of the global server 400 via interface IF5 it is capable of adapting to changes observed by cellular network sensors, in order to:

    1. allow the observed cell-ids associated with one network operator to be swapped for the corresponding cell ID's of another network operator (for when the user switches network provider). Note that since the cells of different operators are unlikely to exactly coincide in any given region, it is likely that processing will be required to keep the models accurate when translating from one operator to another.
    2. allow the observed cell-ids to match one technology generation to another (e.g. 2G to a mixture of 2G and 3G) (for when the user upgrades their phone to one including a later technology generation)
    3. adapt to alterations and upgrades that the network operator makes to their network

• In conjunction with the cross-user behaviour pattern subsystem 431 of the global server 400 which is connected to the exceptional behaviour model updater 3124 via interface IF3, it is capable of sharing behaviour patterns between different users, so that when a device's behaviour strays beyond its normal behaviour patterns, its future activity may be predicted by referring to the past behaviours of other devices which have displayed similar behaviours.

The individual components of the User Behaviour Modelling Subsystem 3120 are discussed below:

*User behaviour pattern model trainer 3121*

The job of this component is to identify repeated patterns of behaviour as determined from the sequence of sensor readings supplied by the Sensor Subsystem on interface IF2, and to train models (or a single detector) to detect these patterns.

This task can be computationally intensive. Therefore, in the present embodiment, the model training is also performed on the global server 400, the sensor data being forwarded over interface IF1a to the model trainer 440, and the trained models are fed back to the mobile terminal over interface IF4. The user can choose whether or not to use the self generated models or the server generated ones when both are available. The user can also choose to switch off the local trainer and rely solely on the server trainer in order to save power and processing on the mobile device. In alternative embodiments only a local model generator is used or only a server based model generator is used.

The training job can be split into two phases:

1. Collecting a body of training data (recording the sensor inputs at regular time intervals over a period of, say, a few weeks)
2. Identifying segments of sensor data that are repeated sufficiently frequently within the training data (note, the repeats need not be identical, just similar)
3. Training the models using the identified set of segments of sensor data.

Suitable algorithms have been used in the field of automatic speech recognition. One possibility is to use dynamic programming (a.k.a. dynamic time warping) to match the incoming observations against one or more templates for each of the behaviour patterns.

Alternatively, a modelling technique such as Hidden Markov Models could be used, where one or more models are built for each behaviour pattern, and the incoming observations are matched against those models. In either case, the desired output from the pattern matching process is a probability or likelihood that the sequence of observations was produced by any given behaviour pattern. Alternatively a technique such as neural networks (specifically recurrent neural networks) could be used. These techniques are well described in the literature, e.g.:

• HMM's: "Speech and Language Processing" edited by C.Wheddon and R.Linggard pp209-230 , Chapman and Hall, ISBN 0-412-37800-0; DTW
• L. R. Rabiner and B. Juang, Fundamentals of speech recognition, Prentice-Hall, Inc., 1993 (excellent treatment in chapter 4)
• An Overview of the Computational Power of Recurrent Neural Networks, Pekka Orponen, Proceedings of the 9th Finnish AI Conference STeP 2000 {Millennium of AI, Espoo, Finland (Vol. 3: "AI of Tomorrow": Symposium on Theory, Finnish AI Society)}

The two complications in using the above techniques are:

a/ when it comes to working out which behaviour pattern is the correct one for the situation, we will only have partial sensor evidence up to the current time, not a full pattern's worth. Therefore a range of templates or models will have to be generated for each behaviour pattern, representing the fraction of the behaviour pattern up to the current time. (A slightly different approach is required for the RNN implementation)

b/ The DTW technique does not naturally produce numbers that can straightforwardly be converted to behaviour pattern probabilities. A heuristic function to map between DTW scores and probabilities is required. Any suitable function that reasonably approximates this may be used.

Co-pending International patent application published as WO2008/107697 also describes a method of performing such training and the contents of these documents referred to above are hereby incorporated by reference in their entirety or sufficiently to enable a suitable training system to be set up.

The various models once generated are stored in the behaviour pattern model database 3125 and this can be updated over time for any of various reasons (new sense data received - i.e. there is ongoing training - or because of a required translation - e.g. from one service provider to another, etc.). The behaviour pattern model database may also save basic correspondences as a subset of the models to be used when possible. For example if it is always the case that when a particular type of sense data is being detected (e.g. when the device is sensed as being located within a particular cell id, or when the user is detected as being present on some presence server etc.) that the device is in range of an access point, then there may be no need to perform pattern classification (although on a purely formal approach such a process could be deemed mathematically equivalent to performing pattern classification albeit on a fairly trivial scale). However, in other embodiments, full pattern classification could still be performed in order to estimate when the availability of the access point might disappear. Some embodiments might combine both approaches so that a simple existence of a correspondence is noted at first and then subsequently more detailed probability information can be provided based on a full pattern classification analysis.

*Behaviour pattern classifier 3126*

The job of the Behaviour Pattern Classifier is to detect, as early as possible, when a user has started to follow one of the behaviour patterns identified by the behaviour pattern model trainer 3121 and stored in the behaviour pattern model database 3125.
Instead of matching the behaviour patterns against the entire sensor history of the day so far, the classifier attempts to match each of the partial behaviour pattern models to varying length segments of the sensor history leading up to the current time.

This generates probabilities or likelihoods that each of the corresponding behaviour patterns is currently under way. (i.e. the value of $B(i \mid Ot)$ (i.e. the probability of behaviour pattern i given a set of observations Ot) is calculated).

*Model updater 3122*

The model updater includes a cellular network model updater 3123 and an exceptional behaviour model updater 3124 and is responsible for providing the functionality to:

- allow the observed cell-ids associated with one network operator to be swapped for the corresponding cell ID's of another network operator (for when the user switches network provider). Note that since the cells of different operators are unlikely to exactly coincide in any given region, it is likely that processing will be required to keep the models accurate when translating from one operator to another.
- allow the observed cell-ids to match one technology generation to another (e.g. 2G to a mixture of 2G and 3G) (for when the user upgrades their phone to one including a later technology generation)
- adapt to alterations and upgrades that the network operator makes to their network
- provide the ability to predict one user's behaviour based on the behaviour patterns of other users when they depart from their own previously observed behaviour patterns

*Cellular network model updater 3125*

The Cellular network model updater determines whether the models need updating, and if so it sends either:

- the user's model training data (sequences of sensor readings), or
- the trained models

to the Cellular Network Adaptation Subsystem over interface IF5, together with an indication of what form of adaptation is required (being one of: change cell ids from one operator to another; change cell ids to a different technology generation; change cell ids to reflect changes to the network).

If the Cellular Network Model Updater determines that a new SIM is present in the device, and that the SIM is from a different network provider (e.g. if the mobile network code in the sensor readings has changed, but the mobile country code has not changed, or because of this information being provided directly by the Sim card, the device or the user, or because of the current sensed cell id corresponding to a different network operator to the previously stored network operator for the device, etc.) then it determines that the models need updating for a change from one operator to another.

If the Cellular Network Model Updater determines that it has been reinstalled in a new terminal that has a different generation of wireless interface (e.g. moving from 2G to 3G) then it determines that the models need updating on that basis, etc..

If the Cellular Network Model Updater either:

- determines that sufficient time has passed since the models were last updated, or
- it receives a message from the Cellular Network Adaptation Subsystem that the network has changed

then it updates the models due to network changes.

The Cellular Network Adaptation Subsystem 411 of the global server 400 returns adapted models to the Model Updater 3123 over interface IF5.

*Exceptional behaviour model updater 3124*

The purpose of the exceptional Behaviour Model Updater is to detect when the user has stepped outside their normal behaviour patterns (or outside those for which there has been sufficient training data to train specific models for that user) and provide alternative behaviour pattern models based on other users' (devices') behaviour patterns. It performs the following process:

1. Identify sensor reading sequences that are not well modelled (i.e. have poor matches to all the existing behaviour pattern models for that user, or have location or Cell-id information from outside the geographic area for which specific user models exist)
2. Send recent sensor information to the Cross User Behaviour Pattern subsystem (over interface IF3)
3. Receive back generic cross-user models relevant to the recent sensor information.
4. Combine the received cross-user models with the existing user-specific models for forthcoming behaviour pattern classification.

*AP Visibility Probability Estimator 3127*

The AP Visibility Probability Estimator maintains within its associated access point visibility database 3128 a mapping between each behaviour pattern and the probability of seeing a Wi-Fi access point at any point in that pattern. From this (together with the probabilities provided by the pattern classifier 3126 of the device currently being in any of the stored behaviour patterns) it can calculate the probability that at any point in the immediate future a Wi-Fi access point will be visible. It provides this information in the form of a vector or vectors of probabilities $P_i(t_j)$ indicating the probability of seeing a usable access point on wireless interface i at time slot $t_j$ to the Device Controller Subsystem 3140 on interface IF2.

*Device Controller Subsystem 3140*

The Device Controller Subsystem receives inputs from the User Behaviour Modelling Subsystem 3120 and from Applications 3130.

In the present embodiment the applications themselves provide information regarding their communication requirements (whether they need to communicate, bandwidth needed, urgency, cost etc). In alternative embodiments some of this information could be provided by an intermediate function with settings which can be controlled by a user of the device (either on an every time basis or the user could specify default values for respective applications and tasks to be performed by the applications etc.).

From this it can determine whether any network access is required and make decisions as to which wireless interface will be the best candidate to use for each task from each application, and when to use it. It will also use the information to adjust its wireless interface polling intervals to minimise the delay in finding an access point whilst simultaneously minimising the number of polling attempts required to find the access point.

For example, an application might specify that for a particular task it needs to send one MB information, but the requirement is to send it at minimum cost, as long as it is sent within the next half hour. The device controller subsystem has access to two wireless radios, a Wi-Fi radio and a wide area cellular connection (which is assumed to be always available for the purposes of this example). Let's consider two cases:

1/ The controller receives a Wi-Fi availability prediction that says that there is a low probability of seeing Wi-Fi in the next 15 minutes but a high probability for the following 15 minutes.
It therefore concludes that it is best to wait 15 minutes and try to deliver the data over Wi-Fi. It therefore sets a low polling rate for WiFi for the first 15 minutes and then ramps it up to a high polling rate. If it finds Wi-Fi it connects and sends the data over the link, and only if it has failed to find Wi-Fi shortly before the half hour deadline, does it resort to sending the data over the cellular connection instead.
2/ The controller receives a Wi-Fi availability prediction that says that there is a low probability of seeing Wi-Fi within the next half hour
The controller concludes that there is nothing to be gained by waiting and sends the data over cellular network straight away (and discontinues polling Wi-Fi until the next application data request is received - note: the sensor subsystem may be performing its own Wi-Fi sensing independently). Alternatively, it might choose a strategy that says, I'll wait just in case Wi-Fi comes available, even if it is unlikely, and will maintain a low polling rate to minimise battery consumption that reflects that low likelihood.

Note that in both cases during the 30 minutes, new Wi-Fi availability predictions will be received by the controller, and it will update its behaviour accordingly.

*Input from User Behaviour Pattern Modelling Subsystem*

The input from the user behaviour pattern modelling subsystem over interface IF2 is a prediction of the probability of seeing an access point at a range of times in the future. This is delivered as a vector of n real numbers $P_T(t)$ where *t* ranges from the current time, *T,* to *T+ (n-1)ΔT*, where *ΔT* is some small interval of time. A refreshed set of predictions will be delivered to the device controller subsystem at regular intervals, which will be used to update the decisions that the controller makes.

*Input from User Applications*

In the present embodiment, applications register connection requests with the controller 3140 specifying their data communication requirements using at least the following parameters:

- One off / regular
- Approximate volume of data to transfer (up and down)
- Urgency

  ○ Real-time
  ○ Urgent
  ○ Non-urgent
  ○ By specified deadline

- QoS
- Bandwidth

Scenarios -

- Email - every 30 mins, or permanently connected paging / push channel, with content collection over a cheaper channel
- address book backup - regular backups/synchronises every so often - non-urgent
- file system synchronisation - regular sync or on-demand
- movie download - could be done in background, non-urgent
- video call - high bandwidth, real time
- voice call - low bandwidth, real time
- web browsing - medium bandwidth, real time

*Controller Output*

The controller 3140 produces two forms of output in the present embodiment:

- A wireless network (e.g. Wi-Fi) polling schedule - indicating when the Wi-Fi radio 3150 should be powered up so that it can scan to see whether any usable access points are within range
- Network connections: when it detects a usable access point, it then connects to that access point and hands the connection back to the application(s) that have requested a network connection for which this new connection is appropriate (in terms of QoS, price etc). (The application indicates when it has finished using the connection, so that it can be released).

*Processing the inputs to create the outputs*

One of the principal aims of the controller 3140 is to minimise the power used in searching for suitable networks, whilst minimising the latency for finding them.

*Aggregate the network requirement inputs*

The first step is to aggregate the input requirements from all the applications.

*Determine when to poll*

If there are no application network requirements, then network polling may be switched off.

If there is an urgent or real-time network requirement, a poll can be requested immediately. If no Wi-Fi network is found, then the wide-area network is handed to the application (assuming that it meets the other QoS etc. requirements of the application).

If there is a non-urgent request, then a non-urgent polling strategy such as described below is used to search for Wi-Fi.

If there is a deadline based request, then the controller calculates how long it would take to transfer the requested amount of data at the speed expected from the Wi-Fi network, and also from the wide area network. It subtracts the greater of these two values from the data delivery deadline to determine the latest time $T_2$ that it can afford to wait until when looking for a Wi-Fi network. It then determines a polling strategy based on the input $P_T(t)$ and this data transmit-start deadline, $T_2$. (This might use the same non-urgent polling strategy described below, except that an additional poll might be scheduled at the transmit-start deadline, $T_2$.)

*Action on finding a network*

When a Wi-Fi network is found, a connection to the access point is made and the connection is handed to *all* applications for which the connection satisfies the requirements, and their requirements are deleted from the set of aggregated requirements. (Strictly we should wait until the applications have completed their data transfer before removing their requirements from the list.)

*Polling Strategies*

A number of polling strategies are possible. A good strategy will hold off polling until the probability of finding an access point is reasonably high, but if there is no predicted increase in likelihood of finding an access point it will still maintain a low background level of polling:

A couple of possible strategies are detailed below.

*Simple Implementation*

The RC determines the delay there has been since the last check for availability of a specified network.
It then determines whether to turn on and poll on a particular wireless interface when the function H(t) exceeds a predefined threshold value, where H(t) is defined as follows:

Let

$$H_{Ti}(t) = f_i(t-t_{pi}) * P_{Ti}(t)$$

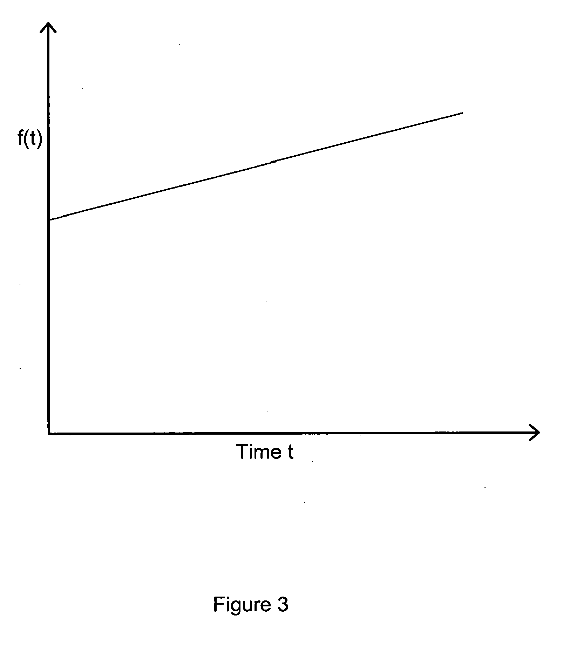

where
$P_{Ti}(t)$ is the probability prediction made at time T that there will be access point on wireless interface i visible at time t, (received from interface IF2)
$t_{pi}$ is the time of the last polling scan on wireless interface i
$f_i(t)$ is a predefined function of time for wireless interface i, such as the linear ramp shown in Figure 3. Then
if (at least one application requires access to a network) AND $H_i(t) > Q$

then
perform a polling scan on wireless interface i
where
Q is a predefined threshold value

*Backoff strategy implementation*

The function $H_i(t)$ is modified so as to increase the polling interval for after repeated polling events where no network has been detected and there has been no significant increase in the likelihood of finding a network. One way to do this is to modify $f(t)$ along the following lines:
Let

$$f(t) = m^*t + c$$

where
c is a constant
m is a variable parameter modified after each polling cycle
Then
If (no network found in scan n+1) AND $(P_i(t_{n+1}) < P(t_n) + \delta)$ then

$$m_{n+1} = m_n * k$$

where
k is a constant
n is the index of the polling cycle
Alternatively
if (network found)
then

$$m_{n+1} = m_0$$

where
$m_0$ is the default initial value of m

*Global Access Point Information Server 400*

The global access point information server acts as a central resource for the mobile evices and acts to co-ordinate the various devices to provide better models for use by the mobile devices as well as providing various translation services as ddiscussed above and below.

*Cellular networks model adaptation subsystem 410*

The cellular networks model adaptation subsystem contains a mappings database 411 that holds a number of mappings of cell ids:

- Cell id to locations for each network operator
- Location to cell-id for each network operator
- 2G to 3G (etc) for each network operator
- including the changes over time in each of the above mappings (to enable mapping of network upgrades)

It has two modes of operation:

1. It operates on the raw sensor data and trains new models
In this case, the sensor data is modified in the adaptation process and then a new set of models are trained using the modified sensor data (using the same algorithms as in the Behaviour Pattern Model Trainer).
2. It operates on existing models and modifies them
In this case, the cell-id data in the models is modified directly, with no retraining phase.

The updated models are then sent back to the Cellular Network Model Updater 3123 on the mobile terminal on interface IF5.
The following subsections describe the different adaptation processes

*Adapting to a different network operator*

In the first mode of operation, if the sensor logs contain location information (e.g. GPS readings), then the cell-id fields in the sensor data can be replaced by looking at the GPS location and looking up the corresponding cell-id in its location to cell-id database. If GPS location is not present, then it will perform a mapping from the existing cell-ids to location and then location back to new cell-id of the different operator. (More sophisticated mappings are possible, taking into account sequences of cell-ids and timings to better estimate the mapping to the new operator.)

*Adapting to network generation change*

When a 2G device is replaced by a 3G device, the 3G device will see both 2G and 3G cell ids, and my be handed off from the 2G to the 3G network and back. Even at a fixed location, the cell ids seen by the 3G devices will typically swap back and forth between the 2G and 3G cells. Therefore when adapting to a device upgrade, both 2G and 3G cell ids will have to be incorporated into the new models, it's not a case of just replacing the 2G cell id with the corresponding 3G id.

1. Operating on raw sensor data

Edit the training data, randomly replacing the 2G cell ids with either the 2G or corresponding 3G cell id and retrain the models on the modified data, or

2. Operating directly on the models

Edit the models directly, creating an additional parallel 3G path through the model, everywhere the 2G path previously existed

*Adapting to network upgrades*

The implementation of this can be performed in the same manner as adapting to a new network operator, except the "old" and "new" operators are snapshots of the same operator at two different points in time.

*Cross-user behaviour modelling subsystem 430*

This is the server side component that detects common patterns of behaviour across multiple users and creates cross-user behaviour pattern models based on this data.

Model training proceeds in much the same way as described for user specific models, except that data from multiple users is combined to detect common patterns. (To speed up this process, location or cell-id information can be used to identify which data segments it is worth comparing when looking for repeating behaviour patterns.) The cross user models that are generated are stored in the associated cross user model database 431.

*User presence subsystem 420*

The User Presence Subsystem acts as a clearing house for information regarding the presence status of each user on devices other than the mobile terminal hosting the behaviour modelling software. So when a user logs onto, say, their home PC or laptop, a software client oh the PC/laptop sends a presence update to the server to indicate that the user is now on-line on the PC, and when they log off, or are inactive for a certain period, the client will update the presence server accordingly. The presence information is stored on the associated presence database 421.

The presence server then forwards any state changes for a particular user to the Sensor Subsystem 3110 on IF6 to be integrated with the other sensor data.

**Claims**

1. A global access point information server (400) for use with a plurality of mobile devices (310, 320, 330) each of which contains at least a first (3150) and a second (3160) type of transceiver for communicating via first and second different communication technologies respectively, the global access point information server (400) storing access point information and other associated information related to a first region, the server including a receiver (IF1a, IF3, IF5) for receiving sensed information from a mobile device, a processor (410, 430, 440) for processing the received sensed information to identify a subset of the access point information data (411, 431, 440) stored by the server which is pertinent to the mobile device and a transmitter (IF3, IF4, IF5) for transmitting this information to the device.

2. A method of providing access point information to a plurality of mobile devices (310, 320, 330), the method comprising providing a global access point information server (400) for use with the mobile devices (310, 320, 330) each of which contains at least a first (3160) and a second (3150) type of transceiver for communicating via first and second different communication technologies respectively; storing, at the global access point information server, access point information and other associated information related to a first region; receiving, at the global access point information server, sensed information from a mobile device and processing the received sensed information to identify a subset of the access point information data stored by the server which is pertinent to the mobile device; and transmitting this information to the device.

3. A computer readable medium storing processor implementable instructions for causing the method of claim 2 to be carried out when run on a general purpose computer.

Figure 1

Figure 2

Figure 3

| | Europäisches Patentamt European Patent Office Office européen des brevets | **EUROPEAN SEARCH REPORT** | Application Number EP 09 25 0535 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 203 11 008 U1 (INTERDIGITAL TECH CORP [US]) 15 January 2004 (2004-01-15) * paragraph [0009]; figure 2 * * paragraph [0011] - paragraph [0020] * * paragraph [0025] - paragraph [0027]; figure 3 * ----- | 1-3 | INV. H04W48/14 |
| X | US 2008/161013 A1 (FRIMAN LEIF [FI]) 3 July 2008 (2008-07-03) * paragraph [0023] * * paragraph [0029] - paragraph [0036] * ----- | 1-3 | |
| A | HERWONO ET AL: "Provisioning and performance of mobility-aware personalized push services in wireless broadband hotspots" COMPUTER NETWORKS, ELSEVIER SCIENCE PUBLISHERS B.V., AMSTERDAM, NL, vol. 49, no. 3, 19 October 2005 (2005-10-19), pages 364-384, XP005030064 ISSN: 1389-1286 * page 1, right-hand column, line 6 - page 2, left-hand column, line 35 * * page 2, right-hand column, line 41 - line 43 * * paragraph [02.2] - paragraph [2.2.2] * * paragraph [2.3.2] * * paragraph [03.1] - paragraph [03.2] * * paragraph [0004] * ----- | 1-3 | TECHNICAL FIELDS SEARCHED (IPC) H04W |
| A | GB 2 366 699 A (VODAFONE LTD [GB]) 13 March 2002 (2002-03-13) * page 1, line 15 - page 2, line 8 * ----- | 1-3 | |

The present search report has been drawn up for all claims

| Place of search | Date of completion of the search | Examiner |
|---|---|---|
| The Hague | 21 July 2009 | Orfanos, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 09 25 0535

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2009

| Patent document cited in search report | | Publication date | Patent family member(s) | | Publication date |
|---|---|---|---|---|---|
| DE 20311008 | U1 | 15-01-2004 | AT | 392106 T | 15-04-2008 |
| | | | AU | 2003256549 A1 | 16-02-2004 |
| | | | CN | 2674799 Y | 26-01-2005 |
| | | | CN | 2674801 Y | 26-01-2005 |
| | | | DE | 20311007 U1 | 30-10-2003 |
| | | | EP | 1527629 A1 | 04-05-2005 |
| | | | ES | 2302952 T3 | 01-08-2008 |
| | | | HK | 1057451 A2 | 05-03-2004 |
| | | | HK | 1057454 A2 | 05-03-2004 |
| | | | KR | 20040090945 A | 27-10-2004 |
| | | | KR | 20040093643 A | 06-11-2004 |
| | | | KR | 20050090969 A | 14-09-2005 |
| | | | TW | 259008 B | 21-07-2006 |
| | | | TW | 244658 Y | 21-09-2004 |
| | | | TW | 244659 Y | 21-09-2004 |
| | | | WO | 2004012468 A1 | 05-02-2004 |
| US 2008161013 | A1 | 03-07-2008 | NONE | | |
| GB 2366699 | A | 13-03-2002 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020187780 A
- US 20070026866 A

- WO 2008107697 A

**Non-patent literature cited in the description**

- Speech and Language Processing. Chapman and Hall, 209-230

- **L. R. Rabiner ; B. Juang.** Fundamentals of speech recognition. Prentice-Hall, Inc, 1993